# EUROPEAN PATENT APPLICATION

(11) **EP 1 616 815 A1**
(43) Date of publication of application: **18.01.2006**
(21) Application number: 04702794.1
(22) Date of filing: 16.01.2004
(51) Int. Cl.: B65D 85/57

(54) **STORAGE CASE FOR DISK-LIKE RECORDING MEDIUM**

(30) Priority: 20.01.2003 JP 2003010707
(71) Applicant: Deja GmbH, 51427 Bergisch Gladbach (DE)
(72) Inventor: Kohana, Norio, Katsushika-ku, Tokyo 125-0033 (JP)
(74) Representative: Maxton Langmaack & Partner
(86) International application number: PCT/JP2004/000278
(87) International publication number: WO 2004/065262

(57) **Abstract**

The storage case for a disk-like recording medium comprises a case base A, a case cover body B swingably connected to one end side of the case base A through a pivotal supporting means, and a holding plate C which can be stored in the case body and hold the article and is swingably connected to one end side of the case cover body B through a pivotal supporting means. The holding plate C has a front plate 20 with a holding means for holding the article and a rear plate 21, and so constructed that in coordination with the case cover body B, the other end side of the front plate 20 swings upwardly departing from the case base A while the rear plate 21 swings downwardly bending against the front plate 20 and departing from the other end side of the article. Accordingly the storage case makes it easy and smooth to store and taking out the article and is easy-to-use, handy and simple in structure.

## Description

### Technical Field of the Invention

This invention relates to a storage case for a disk-like recording medium such as a CD, a CD-ROM and a DVD or the like formed relatively thin and having a center hole, in particular, relates to the storage case which can surely store such an article and hold it stably, and is easy and smooth to store or take out it.

### Background of the Invention

A conventional storage case for an article formed relatively thin and having a center hole such as a disk-like recording medium (hereinafter called a disk-like article) is described as a prior art (Fig. 11) in Japanese patent application No.JP-A 2000-43970, for example.

The conventional storage case comprises a nearly rectangular shallow box and its cover of transparent synthetic resin. The box is provided with a catching member at its center for supporting the center hole of a disk-like article. The cover is approximately the same as the box in size and swingably connected to the box.

In order to store the disk-like article in or take it out of such a storage case, it is necessary to open the cover, and then fit the center hole of the disk-like article to the catch member of the storage case or release the center hole from the catch member. Therefore storage and taking out the disk-like article are complex and time-consuming.

To solve the disadvantages of the conventional storage case, the inventors priorly proposed a storage case disclosed in Japanese patent application No. JP-A 2002-321785, Figs. 1 and 3, which makes easy to store or take out the disk-like article by hands or fingers.

The priorly proposed storage case comprises a case base, a first flap which is swingably connected to one end side of the case base through a pivotal supporting means, a second flap which is swingably connected to the other end side of the case base through a pivotal supporting means, and a holding plate for holding an article to be stored. The holding plate has a plate base whose other end side can be stored between the case base and the second flap, a joint member provided on the back side surface of the first flap, and a connecting member for connecting the joint member and the plate base through a hinge. The plate base is provided with a holding means for holding an article. The storage case is so constructed that in coordination with the swinging movement of the first flap caused by the pivotal supporting means, the holding plate moves to the direction to be drawn out from between the case base and the second flap, while the joint member swings against the plate base through the hinge and one end side of the plate base upwardly departs from the back side surface of the first flap.

The storage case like this makes it easy to take out or store an article by hands or fingers, however, there are still some disadvantages to be studied and developed in the view of stability of holding an article, easiness of handling, simplification of the storage case and cost containment, etc.

The main object of the present invention is to provide a storage case for a disk-like recording medium, which makes it easier, surer and smoother to store or take out an article, and can stably hold the article, and further which is handy, easy-to-use, and suitable for exhibition of the article.

The other object of the present invention is to provide a storage case for a disk-like recording medium with a simple structure which is easy-to-manufacture, easy-to-assemble, suitable for mass production, durable and economical.

### Summary of the Invention

The inventor studied to achieve the objects and accomplished the present invention essentially constructed as follows.

A storage case for a disk-like recording medium according to the present invention comprises
a case base with its top open;
a case cover body which is connected to one end side of the case base through a first pivotal supporting means so as to freely swing up and down and can cover the top open portion of the case base by the swing; and
a holding plate which is connected to one end side of the case cover body through a second pivotal supporting means so as to freely swing up and down and can be stored in a case body consisting of the case base and the case cover body.

The holding plate has a front plate which is connected to one end side of the case cover body through the second pivotal supporting means so as to freely swing up and down, and a rear plate which is connected to the front plate through a hinge member so as to freely bend.

The front plate is provided with a holding means for removably holding an article and is so constructed that in coordination with the opening and swinging movement of the case cover body against the case base, the whole of the holding plate slightly moves to one end side and then the other end side of the front plate upwardly swings departing from the case base, while the rear plate downwardly swings bending against the front plate and departing from the lower face on the other side of the article held by the front plate.

As constructed above, just by swinging the case cover body so as to depart from the case base, the whole of the holding plate moves to one end side and then the front plate swings so as to rise together with the article. At the same time, the rear plate swings so as to bend against the front plate departing from the article held by the front plate. So it becomes easy to take out the article stored.

In order to store the article in the storage case, it is enough to make the front plate hold the article and then swing the case cover body toward the case base. The storage case is easy to make the front plate hole the article and store it. In other words, putting in and out the article are smoothly done just by swinging the case cover body, consequently the storage case is handy and easy-to-use.

Additionally the storage case can exhibit the article in a manner easy-to-see and is simple in structure, suitable for mass production, easy-to-manufacture, easy-to-assemble, low cost, durable and economical.

Preferably the holding means has a front holding means which is arranged at one end side of the front plate for holding one end side of the article, and a center hole holding means which is arranged at almost central portion of the holding plate for holding the center hole of the article. The front holding means is preferably so constructed that it can hold one end side of the article which is removably inserted in the direction along the surface of the front plate. The center hole holding means preferably has a central protruding member connected to the front plate through a flexible piece and is so constructed that the central protruding member is removably fitted into the center hole of the article held by the front holding means from the lower side of the hole.

As the central protruding member fits into the center hole of the article from the lower side, the article held by the front holding means will not be released from the front holding means by an unexpected external force. That means the article can be held more surely and stably. Still more, also an unskilled person can store and take out the article easily. That means the storage case is easy to use.

In particular, when the storage case is open, the article stored is held stably on the front plate through both the front holding means and the center hole holding means, so the article may not easily be released and damaged.

Moreover in the storage case, preferably a guide projection is respectively provided on either side edge of the rear plate of the holding plate, and preferably a guide groove for guiding the guide projection to move is respectively provided on either side piece of the case base.

According to the structure above, the other side of the rear plate is surely guided and the rear plate can surely swing bending against the front plate by the swinging movement of the case cover body. Particularly the other side of the rear plate is prevent from freely moving up and down, so the holding plate may not be damaged.

Furthermore in the storage case, preferably a step which runs along the circumferential edge of the article stored is formed on each surface of the front plate and of the rear plate of the holding plate, and a holding piece which touches the surface of the article stored is provided on either side of one end side of the front plate.

According to the structure, the article is stably held by the holding plate and even a person in unskilled can easily store and release the article without damaging it.

### Brief Description of the Drawings

Fig. 1 is an exploded perspective view showing an embodiment of the storage case for a disk-like recording medium according to the present invention.
Fig. 2 is a vertical section of the storage case for a disk-like recording medium showing that the case cover body is closed with respect to the case base.
Fig. 3 is a partially omitted vertical section of the storage case for a disk-like recording medium showing that the case cover body is open with respect to the case base.
Fig. 4 is a partially broken transverse section of the storage case for a disk-like recording medium.

### Description of the Preferred Embodiments

An embodiment of the storage case for a disk-like recording medium according to the present invention is described below referring to the attached drawings.

The storage case is so constructed that it can surely and stably store an article formed relatively thin and having a center hole such as a CD, a CD-ROM, a DVD or other disk-like recording medium, and also that the article can be easily and smoothly stored and taken out.

The storage case is suitable for storage of the article formed relatively thin and having a center hole such as a disk-like recording medium but also can store an article which is not formed like a disk or a recording medium.

The storage case for a disk-like recording medium of the present invention has a case body comprising a transparent (or translucent, or partially transparent or translucent, or opaque) synthetic resin case base A which is a shallow box with its top open, and a transparent (or translucent, or partially transparent or translucent, or opaque) synthetic resin case cover body B which is swingably connected to one end side of the case base A through a first pivotal supporting means and formed so as to be able to cover the top open portion of the case base A by pivotal movement in the vertical direction. The storage case further has a synthetic resin holding plate C for holding an article. The holding plate C can be stored in the case body and is connected to one end side of the case cover body through a second pivotal supporting means so as to swing freely up and down.

The axis of the first pivotal supporting means provided between the case base A and the case cover body B is almost parallel to the axis of the second pivotal supporting means provided between the case cover body B and the holding plate C and also almost parallel to the surface of the case base A. When the case body is closed, the axis of the second pivotal supporting means is positioned closer to the other side than the axis of the first pivotal supporting means.

In other words, when the case cover body B of the closed body is opened (by swinging it to 180 degrees, for example) , the axis of the second pivotal supporting mean moves along the trace in a nearly half arc around the axis of the first pivotal supporting means.

The holding plate C has a front plate 20 which is connected to one end side of the case cover body B through the second pivotal supporting means so as to freely swing up and down, and a rear plate 21 which is connected to the other end side of the front plate 20 through a hinge member 22 so as to freely bend. The front plate 20 is provided with a holding means for holding the article.

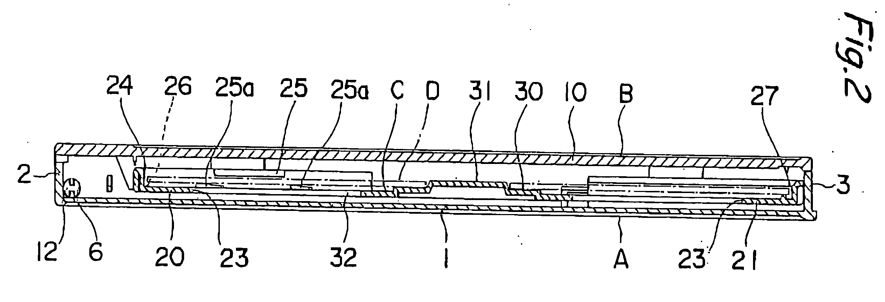

In other words, the holding plate C is so constructed that: it is stored in the case body holding the article when the case body is closed (Fig. 2);
as the case cover body B swings against the case base A, in coordination with the swinging movement of the case cover body B, the whole of the holding plate C slightly moves to one end side in the middle of the movement along the trace in a nearly half arc;
when the back side surface of the front plate 20 touches the top of the front piece 2 (described below) of the case base A and one end side of the holding plate C becomes lower than the top of the front piece 2, the other end side of the front plate 20 swings around the top of the front piece 2 and departs from the case base A; and
the front plate 20 and the article stored are supported in a slanting posture.

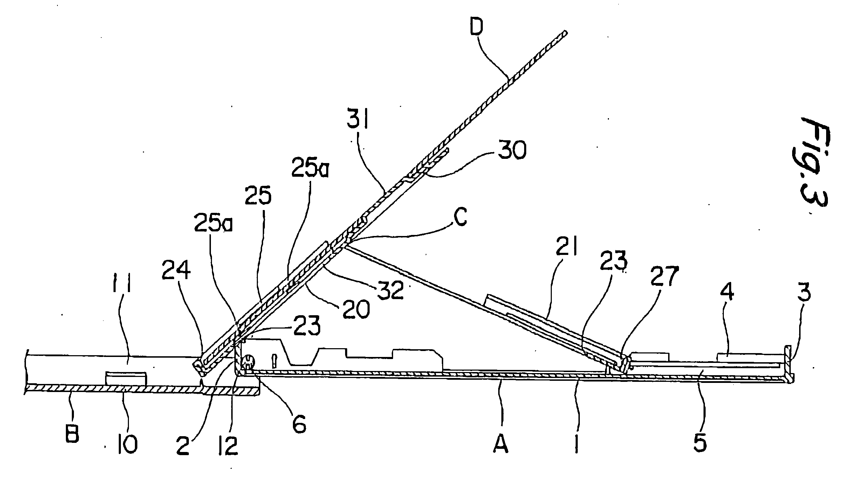

At the same time, the rear plate 21 swings bending against the front plate 20. That means one end side of the rear plate 21 swings upwardly to depart from the case base A, and departs from the other side of the article which is held by the front plate 20 (Fig. 3).

Thus, the other end side of the article stored can project diagonally above, so it is easy to take the article by hands or fingers. That means it is easy to take out or store the article. Moreover, when the case body is opened, the surface of the article stored turns diagonally above so it is optimal for exhibition.

The holding means has a front holding means which is arranged at one end side of the front plate 20 for holding one end side of the article stored, and a center hole holding means which is arranged at almost central portion of the holding plate C for holding the center hole of the article stored. The front holding means is so constructed that it can hold one end side of the article stored which is removably inserted in the direction along the surface of the front plate 20.

The center hole holding means has a central protruding member 31 connected to the front plate 20 through a proper, flexible piece 32, and is so constructed that the central protruding member 31 is removably fitted into the center hole of the article held by the front holding means from the lower side of the hole.

The case base A is a shallow open box integrally assembled with a nearly rectangular bottom plate 1 of proper dimensions for storing a recording medium D, a narrow belt-shaped front piece 2 fixed upright to one end side of the bottom plate 1, a narrow belt-shaped rear piece 3 fixed upright to the other end side of the bottom plate 1, and a narrow belt-shaped side piece 4 respectively fixed upright to each of the right and left end sides of the bottom plate 1. Each side piece 4 may be partially cut in its middle or top part.

Further, each side piece 4 is provided with a pivotal hole 6 near one end side thereof, which constitutes the first pivotal support means for swingably connecting the case cover body B, and with a guide groove 5 near the other end side thereof, which can smoothly guide a guide projection 28 (described below) of the holding plate C.

The guide groove 5 prevents the guide projection 28 from moving above and ensures to bend the rear plate 21 of the holding plate C against the front plate 20.

It is preferable to form one end side of the guide groove 5 closed and to form an upward opening on the other end side of the guide groove 5 so that the guide projection 28 can move above the guide groove 5.

In other words, preferably the guide groove 5 is so constructed that the guide projection 28 can be easily put in or out of the guide groove 5 in order to easily swing the other end side of the holding plate C upwardly for deviating the guide projection 28 from the guide groove 5, assembling the storage case, and getting a commentary, a lyrics card, a manual, or other cards related to the article in and out under the holding plate C.

There is a small holding hole near the other end side of each side piece 4, in which a holding projection of the case cover body B can fit so that the case cover body B keeps the case base A closed to some extent (not illustrated).

The case cover body B comprises, for example, a nearly rectangular top plate 10 with suitable size for covering the open portion of the case base A and a narrow band-shaped side piece 11 downwardly fixed to the right and left end sides of the top plate 10, and is formed like a shallow channel. There is a short pivotal projection 12 constituting the first pivotal support means for swingably connecting the case cover body B to the case base A. The pivotal projection 12 can fit into the pivotal hole 6 of the case base A.

The first pivotal supporting means may be constituted by a short pivotal projection provided on the case base A and a small pivotal hole provided on the case cover body B, or by other proper pivotal supporting means.

There is a small pivotal hole 13 near one end side of each side piece 11, constituting the second pivotal support means for swingably connecting the holding plate C to the case cover body B, in which a pivotal projection 26 (described below) of the holding plate C can fit.

Further, there is a holding projection which can removably fit into the holding hole of the case base A. A plurality of nearly half disk-shaped holding piece is provided on the inside of each side piece 11, that makes it possible to hold a commentary, a lyrics card, or other cards related to the recording medium D on the back side of the top plate 10.

The holding plate C comprises a nearly rectangular front plate 20 of size (width) lower than half of the diameter of the article stored such as a recording medium D, and a nearly rectangular rear plate 21 swingably connected to each side of the other end side of the front plate 20 through a hinge 22, which are preferably made of synthetic resin and integrally constructed so that the rear plate 21 can swing only downwardly against the front plate 20 by the gravity or the like from the position where the surfaces of the both plates 20, 21 are in the same plane.

The surface of one end side of the front plate 20 and the surface of the other end side of the rear plate 21 are provided with nearly arc steps 24 and 27 respectively, which run almost along the circumferential edge of the article stored for storing the article stably. The central part of the front plate 20 and the central part of one end side of the rear plate 21 are respectively provided with an opening 23. Further each side of the step 24 on the front plate 20 has a nearly rectangular holding piece 25 which can touch the surface of the article stored. The right and left parts of the rear plate 21 respectively have an opening 29 for reducing weight.

There is a small pivotal projection 26 constituting the second pivotal supporting means for swingably connecting the holding plate C to the case cover body B. The pivotal projection 26 is formed so as to be pivotally supported by the pivotal hole 13 of the case cover body B.

The second pivotal supporting means provided between the holding plate C and the case cover body B may be constituted by a short pivotal projection on the case cover body B and a small pivotal hole on the holding plate C, or by other proper pivotal supporting means.

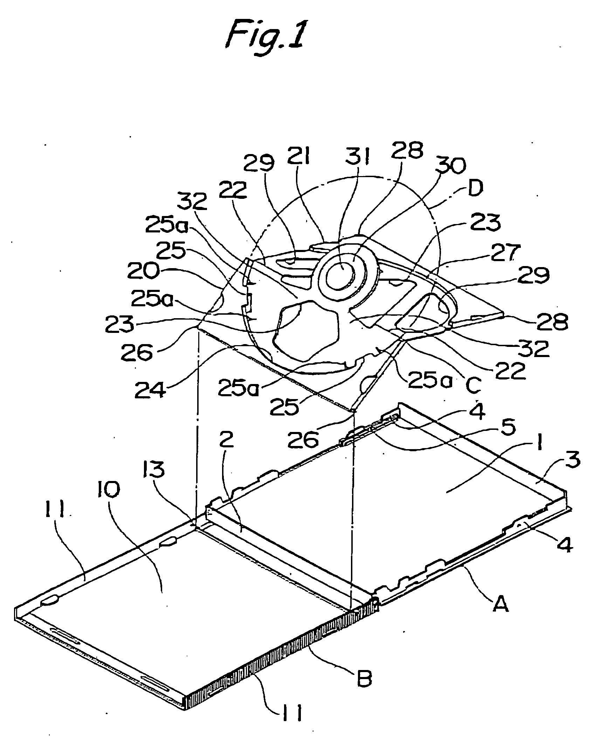

Further, a guide projection 28 is respectively provided on each side edge of the other end side of the rear plate 21, which moves in the guide groove 5 of the case base A (Fig. 1).

It is preferable to provide a protect member such as unwoven cloth on the surface of the holding plate C so as to protect the article (not illustrated). Instead the step 24 of the front plate 20 and the step 27 of the rear plate 21, small projections may be provided which project out each surface of the front plate 20 and the rear plate 21.

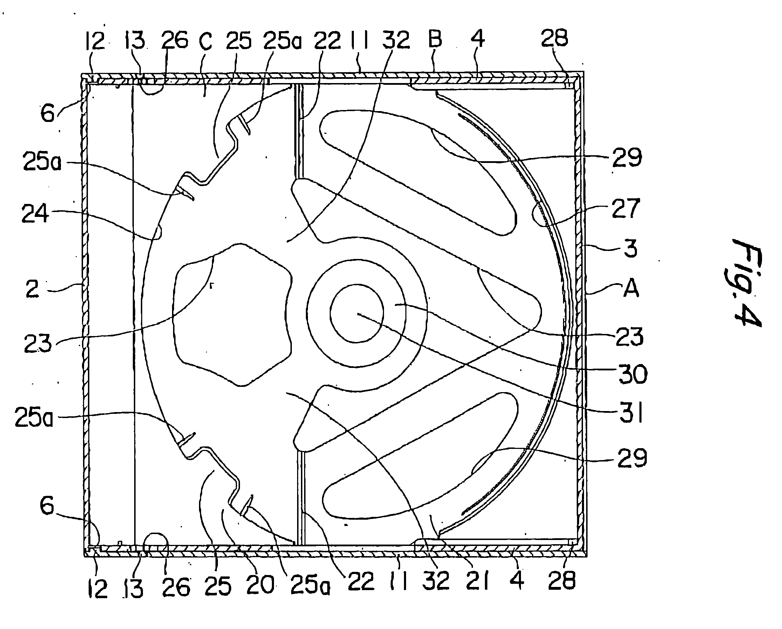

It is also preferable to provide a small projection 25a on the surface of the front plate 20 near each side of the holding piece 25, and a nearly oval arc projection near the step 27 so that each projection can touch the lower side of the article stored in order to reduce the area touching the article (Fig. 4).

In other words, it is preferable to make clearance between the article and the holding plate C to prevent the back side surface of the article from being scratched.

The ridge of the small projection 25a is inclined to be higher toward one end side (toward the step 24), so as the article is inserted more deeply, the article is held more tightly and surely between the small projection 25a and the holding piece 25. In addition to it, it is easy to insert the article in the clearance between the small projection 25a and the holding piece 25.

The front holding means is so constructed that the holding piece 25 and a part of the surface of the front plate 20 can hold one end side portion of the article from its upper and lower sides. Therefore it is able to insert or draw out the article along the surface of the front plate 20 to hold or release it.

The center hole holding means is so constructed that a central protruding member 31, removably fitted into the center hole, is provided on a center step 30 which is connected to the front plate 20 through a pair of flexible pieces 32.

In other words, the central protruding member 31 can move up and down using the flexibility of the pair of flexible pieces 32 and can removably fit into the center hole of the article held by the front holding means from the lower side of the hole. That prevents the article from being released from the front holding means by unexpected external force.

The followings are the detailed description about how to use the storage case according to the invention.

In order to take out the article which is stored in the storage case, move the other end side of the case cover body B upwardly to swing it. Then one end side of the holding plate C is lifted a little and the whole of the holding plate C moves slightly toward one end side, when the guide projection 28 of the holding plate C moves slightly toward one end side through the guide groove 5 of the case base A.

By swinging further the case cover body B, the back side surface of the front plate 20 touches the top of the front piece 2 of the case base A, and the other end side of the front plate 20 and the article stored swing around the top of the front piece 2 departing from the case base A. At the same time, the rear plate 21 swings bending against the front plate 20 through the hinge 22 and the article held by the front plate 20 projects diagonal above so that the other end side of the article departs from the rear plate 21 (Fig.3). Then the article stored can be easily taken out.

In order to take out the article stored, press the central protruding member 31 downwardly to loosen the engagement of the central protruding member 31 and the center hole before drawing the article out along the surface of the front plate 20.

On the contrary, in order to store the article in the storage case, slide the article along the surface of the front plate 20 to insert the circumference portion of the article between the holding piece 25 and the surface of the front plate 20 (a small projection 25a) until the circumference portion touches or nearly touches the step 24. Then the central protruding member 31 fits into the center hole by means of flexibility of the flexible piece 32, and the article is stably held on the front plate 20.

Further swing the case cover body B so as to cover the open portion of the case base A. Then the front plate 20 and the article swing, and the other end side of the front plate 20 approaches to the bottom plate 1 of the case base A until the article is mounted on the surface of the rear plate 21 and the circumference of the article touches or nearly touches the step 27. At the same time, the rear plate 21 swings and its one end side approaches to the surface of the case base A until it becomes even with the front plate 20.

By swinging the case cover body still more, the whole of the holding plate C moves toward the other end side when the guide projection 28 moves through the guide groove 5 of the case base A toward the other end side. By swinging the case cover body B to close the open portion of the case base A, one end side of the holding plate C lowers a little and is stored stably in the case body.

In the embodiment described above, the specific construction, form, size, material, position, and quantity of each element constituting the storage case are not limited to the description and the invention includes all modifications and alternations without departing from the scope of the appended claims.

### Industrial Applicability

The storage case of the invention can surely store and stably hold a CD, a CD-ROM, a DVD or other disk-like recording medium which is formed relatively thin and have a center hole. Additionally, it is easy-to-use and handy because storing and taking out the article is easy and smooth. Further, the storage case is simple in structure, suitable for mass production, easy-to-manufacture, easy-to-assemble, low cost, durable and economical.

## Claims

1. A storage case for a disk-like recording medium formed relatively thin and having a center hole comprising:
a case base with its top open;
a case cover body which is connected to one end side of said case base through a first pivotal supporting means so as to freely swing up and down and formed so as to be able to cover the top open portion of the case base by pivotal movement; and
a holding plate which is connected to one end side of said case cover body through a second pivotal supporting means so as to freely swing up and down and can be stored in a case body consisting of the case base and the case cover body;
wherein said holding plate has a front plate which is connected to one end side of the case cover body through said second pivotal supporting means so as to freely swing up and down, and a rear plate which is connected to said front plate through a hinge member so as to be able to freely bend; and
the front plate is provided with a holding means to removably hold an article and is so constructed that in coordination with the opening and swinging movement of the case cover body the whole of the holding plate slightly moves to one end side and then the other end side of the front plate upwardly swings departing from the case base, while the rear plate downwardly swings bending against the front plate and departing from the lower surface of the other side of the article which is held by the front plate.

2. A storage case for a disk-like recording medium according to claim 1 wherein:
said holding means has a front holding means which is arranged at one end side of said front plate for holding one end side of the article, and a center hole holding means which is arranged at almost central portion of the holding plate for holding the center hole of the article;
the front holding means is so constructed that it can hold one end side of the article which is removably inserted in the direction along the surface of the front plate; and
the center hole holding means has a central protruding member connected to the front plate through a flexible piece and is so constructed that the central protruding member is removably fitted into the center hole of the article held by the front holding means from the lower side of the hole.

3. A storage case for a disk-like recording medium according to claim 1 or 2 wherein a guide projection is respectively provided on the right and left side edges of the rear plate of the holding plate, and wherein a guide groove, which guides the guide projection to move, is respectively provided on the right and left side pieces of the case base.

4. A storage case for disk-like recording medium according to any of claims 1-3 wherein a step which runs along the circumferential edge of the article stored is formed on the surface of the front plate and the rear plate of the holding plate, and wherein a holding piece which touches the surface of the article stored is provided on the right and left parts of one end side of the front plate.
